(19) Europäisches Patentamt
European Patent Office
Office européen des brevets

(11) **EP 4 043 856 B1**

(12) **EUROPEAN PATENT SPECIFICATION**

(45) Date of publication and mention
of the grant of the patent:
**07.08.2024   Bulletin 2024/32**

(51) International Patent Classification (IPC):
***G01M 13/045*** *(2019.01)*     ***G01H 17/00*** *(2006.01)*
***G08C 19/00*** *(2006.01)*

(21) Application number: **20871415.4**

(22) Date of filing: **24.09.2020**

(52) Cooperative Patent Classification (CPC):
**H04Q 9/00; G01H 1/003; G01M 13/045;**
H04Q 2209/40

(86) International application number:
**PCT/JP2020/035984**

(87) International publication number:
**WO 2021/065663 (08.04.2021 Gazette 2021/14)**

(54) **VIBRATION ANALYSIS DEVICE AND VIBRATION MEASUREMENT SYSTEM**

SCHWINGUNGSANALYSEGERÄT UND VIBRATIONSMESSSYSTEM

DISPOSITIF D'ANALYSE DE VIBRATIONS ET SYSTÈME DE MESURE DE VIBRATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2019   JP 2019181804
07.10.2019   JP 2019184541**

(43) Date of publication of application:
**17.08.2022   Bulletin 2022/33**

(73) Proprietor: **NTN Corporation
Osaka-shi, Osaka 550-0003 (JP)**

(72) Inventor: **TOMINAGA, Masaya
Kuwana-shi, Mie 511-8678 (JP)**

(74) Representative: **Bockhorni & Brüntjen
Partnerschaft
Patentanwälte mbB
Agnes-Bernauer-Straße 88
80687 München (DE)**

(56) References cited:
**EP-A1- 2 543 977        WO-A1-2006/043511
JP-A- 2005 233 789    JP-A- 2006 302 293
JP-A- 2007 278 894    JP-A- H10 221 160
JP-A- S6 293 620        US-A1- 2008 234 964**

**Description**

TECHNICAL FIELD

The present invention relates to a vibration analysis apparatus and a vibration measurement system, and particularly to a vibration analysis apparatus that receives measurement data from a measurement instrument that measures vibration of a rotating body subjected to measurement and conducts vibration analysis and a vibration measurement system including the same.

BACKGROUND ART

Japanese Patent Laying-Open No. 2016-24007 (PTL 1) discloses a system for diagnosing a rolling bearing or the like. In this diagnosis system, an information terminal transmits to a server, measurement data provided from a vibration sensor, a model number of a diagnosis target, and data on a rotation speed in measurement. The server diagnoses an abnormal condition of the rolling bearing or the like based on the measurement data and sends a result of diagnosis back to the information terminal. In the server, specification data (spec data) of the diagnosis target is held for each model number, and the server processes the received measurement data with the use of the specification data corresponding to the received model number and the received data on the rotation speed, and sends a result of diagnosis back to the information terminal. Then, the information terminal shows the result of diagnosis sent back from the server (see PTL 1).

US Patent No. 7587299 (PTL 2) discloses an anomaly diagnosis method of diagnosing an anomaly of a bearing used with a machine installation. In this anomaly diagnosis method, only a frequency component caused by an anomaly in the bearing is extracted. Specifically, frequencies of an inner ring flaw component, an outer ring flaw component, a rolling element flaw component, and a cage component are extracted. The frequency component is calculated based on an inner ring rotation speed, a diameter of a rolling element, a pitch circle diameter, the number of rolling elements, and a contact angle. Then, anomaly diagnosis is conducted based on the magnitude of the extracted frequency component (see PTL 2).

US 2008/234964 A1 discloses a vibration analysis apparatus that receives measurement data from a measurement instrument and conducts a vibration analysis, the vibration analysis apparatus comprising a setting unit that sets information on the rotating body and a criterion value for diagnosing a vibration state of the rotating body, an analyzer that conducts frequency analysis of the measurement data received from the measurement instrument, a processor that calculates reference values used for abnormality diagnosis from the frequency spectrum provided by the vibration analysis, samples peak components larger than the reference values from the provided frequency spectrum, calculates frequency values between peaks and compares the frequency values between peaks and vibration generating frequency components of rotating parts and specifies an abnormal portion based on a result of the comparison and a display that outputs a result of the checking of the outputting unit.

EP 2 543 977 A1 discloses another diagnostic method and a diagnostic device for detecting rubbing specific tools slight bearing of a ship or a power generation facility.

CITATION LIST

PATENT LITERATURE

PTL 1: Japanese Patent Laying-Open No. 2016-24007
PTL 2: US Patent No. 7587299

SUMMARY OF INVENTION

TECHNICAL PROBLEM

In the diagnosis system described in PTL 1, the server conducts diagnosis, and the result of diagnosis sent back from the server is shown on the information terminal. Therefore, a user can check the result of diagnosis on the information terminal. PTL 1, however, does not particularly discuss how to show the result of diagnosis on the information terminal. Intelligibly showing the result of diagnosis to the user who uses the information terminal contributes to improvement in convenience of such a diagnosis system.

In the anomaly diagnosis method described in PTL 2, anomaly diagnosis is conducted only for a frequency component (the inner ring flaw component, the outer ring flaw component, the rolling element flaw component, and the cage component) produced by an anomaly of the bearing. Therefore, diagnosis is not conducted for other anomalies such as misalignment and imbalance of a shaft. Some users may desire diagnosis for a frequency band to which the user desires to pay attention, rather than a specific frequency component produced by the anomaly of the bearing.

Therefore, an object of the present invention is to intelligibly show a result of vibration analysis in a vibration analysis apparatus that receives measurement data from a measurement instrument that measures vibration of a rotating body subjected to measurement and conducts vibration analysis.

Another object of the present invention is to be able to provide a result of diagnosis for a frequency band to which a user desires to pay attention in a vibration analysis apparatus that receives measurement data from a measurement instrument that measures vibration of a rotating body subjected to measurement and conducts vibration analysis.

In the diagnosis system described in PTL 1, the server conducts diagnosis, and hence data should be transferred between the information terminal and the server. Therefore, a network environment should be developed. Depending on a communication status, it may take time to transfer data, and it may take time to show the result of diagnosis on the information terminal.

Then, instead of the server, the information terminal may conduct diagnosis. In order for the information terminal to conduct diagnosis, specification data of a measurement target or coefficient data (specifically, a coefficient of a rotation frequency of a measurement target for calculating a damage frequency representing a frequency of vibration periodically produced in accordance with a damaged part of the measurement target, the coefficient corresponding to the damage frequency when the rotation frequency of the measurement target is a unit frequency) calculated based on the specification data in accordance with a prescribed arithmetic expression should be held in the information terminal. In this case, specifications of the measurement target are accumulation of know-how of a manufacturer, and sufficient attention should be paid to prevention of leakage of the specification data and the coefficient data calculated based on the specification data.

Therefore, another object of the present invention is to prevent, in a vibration analysis apparatus that receives measurement data from a measurement instrument that measures vibration of a rotating body subjected to measurement and conducts vibration analysis, leakage of specification data of the measurement target and coefficient data calculated based on the specification data.

SOLUTION TO PROBLEM

A vibration analysis apparatus according to one aspect of the present invention is a vibration analysis apparatus that receives measurement data from a measurement instrument and conducts vibration analysis that measures vibration of a rotating body subjected to measurement. The vibration analysis apparatus includes a setting unit, an analyzer, a processor, a determination unit, and a display. The setting unit sets information on the rotating body and a criterion value for diagnosing a vibration state of the rotating body. The analyzer conducts frequency analysis of the measurement data received from the measurement instrument. The processor specifies, for a prescribed number of peaks largest in peak value in the descending order in a frequency spectrum obtained by the frequency analysis, a part based on the information on the rotating body. The determination unit determines, for the prescribed number of peaks, the vibration state based on the peak value and the criterion value. The display shows, for the prescribed number of peaks, the peak value, the part, and a result of determination by the determination unit.

In this vibration analysis apparatus, for a prescribed number of peaks largest in peak value in the descending order in a frequency spectrum obtained by frequency analysis, a peak value, a part, and a result of determination by the determination unit are shown. Thus, a user does not have to search a shown result for a point to which attention should be paid or to read a value from a graph of the frequency spectrum, and the user can readily know, for a peak large in vibration, magnitude of vibration, the part, and a vibration state (for example, a danger level, a caution level, or a good level) of the part.

Preferably, the prescribed number is set by a user who uses the vibration analysis apparatus.

A vibration analysis apparatus according to another aspect of the present invention is a vibration analysis apparatus that receives measurement data from a measurement instrument that measures vibration of a rotating body subjected to measurement and conducts vibration analysis. The vibration analysis apparatus includes a setting unit, an analyzer, and a determination unit. The setting unit sets information on the rotating body, a plurality of frequency bands for which vibration analysis is conducted, and a plurality of criterion values provided in correspondence with the plurality of frequency bands, respectively. The analyzer conducts frequency analysis of the measurement data received from the measurement instrument. The determination unit determines, in each frequency band of the plurality of frequency bands, a vibration state in the frequency band based on a peak value of a frequency spectrum obtained by frequency analysis and a criterion value corresponding to the frequency band.

In this vibration analysis apparatus, a criterion value for diagnosing the vibration state is set for each frequency band, and in each frequency band, the vibration state in the frequency band is determined based on the peak value of the frequency spectrum and the criterion value corresponding to the frequency band. Thus, diagnosis is conducted based not on a specific frequency component caused by an abnormal condition (a fault of an inner ring, an outer ring, a rolling element, or a cage) of the bearing but on an appropriate criterion value for each set frequency band. Therefore, this vibration analysis apparatus can provide a result of diagnosis for a frequency band to which a user desires to pay attention.

Preferably, the plurality of frequency bands are set by a user who uses the vibration analysis apparatus.

A vibration analysis apparatus according to another aspect of the present invention is a vibration analysis apparatus that receives measurement data from a measurement instrument that measures vibration of a rotating body subjected to measurement and conducts vibration analysis. The vibration analysis apparatus includes a database unit and a processor. In the database unit, a coefficient of a rotation frequency of the rotating body for calculating a damage frequency representing a frequency of vibration periodically produced in accordance with a damaged part of the rotating body is stored as being divided into a plurality of constants. In vibration analysis, the processor reads the plurality of constants from the database unit to restore the coefficient of the rotation frequency and calculates the damage frequency from the restored coefficient.

The coefficient of the rotation frequency of the rotating body for calculating the damage frequency of the rotating body includes information on specifications of the rotating body. In this vibration analysis apparatus, the coefficient is stored in the database unit as being divided into a plurality of constants. Then, in vibration analysis, the plurality of constants are read from the database unit to restore the coefficient of the rotation frequency, and the damage frequency is calculated from the restored coefficient. Thus, the specification of the rotating body can be prevented from being elucidated in the event of leakage of data stored in the database unit to the outside. Therefore, the vibration analysis apparatus can prevent leakage of specification data of the rotating body subjected to measurement.

Preferably, in the database unit, encrypted data resulting from encryption of the plurality of constants is stored. The processor reads the encrypted data from the database unit to decrypt the encrypted data and restores the coefficient from the plurality of constants that have been decrypted.

Preferably, in the database unit, the plurality of constants are stored in a binary format.

A vibration analysis apparatus according to another aspect of the present invention is a vibration analysis apparatus that receives measurement data from a measurement instrument that measures vibration of a rotating body subjected to measurement and conducts vibration analysis. The vibration analysis apparatus includes a database unit and a processor. In the database unit, encrypted data resulting from encryption of specification data of the rotating body is stored. In vibration analysis, the processor reads the encrypted data from the database unit to decrypt the encrypted data, and calculates a damage frequency representing a frequency of vibration periodically produced in accordance with a damaged part of the rotating body based on the specification data that has been decrypted.

In this vibration analysis apparatus, the specification data of the rotating body used for calculating the damage frequency is stored in the database unit as being encrypted. Then, in vibration analysis, the encrypted data is read from the database unit and decrypted, and based on the decrypted specification data, the damage frequency representing the frequency of vibration periodically produced in accordance with the damaged part of the rotating body is calculated. Thus, the specification of the rotating body can be prevented from being elucidated in the event of leakage of data stored in the database unit to the outside. Therefore, the vibration analysis apparatus can prevent leakage of specification data of the rotating body subjected to measurement.

Preferably, the encrypted data resulting from encryption of the specification data in a binary format is stored in the database unit.

Preferably, the rotating body is a bearing.

Preferably, the information on the rotating body includes (i) a rotation speed or a rotation frequency of the bearing and (ii) a specification of the bearing or a coefficient of the rotation frequency used for calculation of a ball pass frequency of inner ring (BPFI), a ball pass frequency of outer ring (BPFO), and a ball spin frequency (BSF) of the bearing.

Preferably, the vibration analysis apparatus further includes a communication unit that wirelessly communicates with the measurement instrument.

A vibration measurement system according to the present invention includes a measurement instrument that measures vibration of a rotating body subjected to measurement and the above-described vibration analysis apparatus that receives measurement data from the measurement instrument and conducts vibration analysis.

ADVANTAGEOUS EFFECTS OF INVENTION

According to the present invention, the vibration analysis apparatus that receives measurement data from the measurement instrument that measures vibration of the rotating body subjected to measurement and conducts vibration analysis can intelligibly show a result of vibration analysis.

According to the present invention, the vibration analysis apparatus that receives measurement data from the measurement instrument that measures vibration of the rotating body subjected to measurement and conducts vibration analysis can provide a result of diagnosis for a frequency band to which a user desires to pay attention.

According to the present invention, the vibration analysis apparatus that receives measurement data from the measurement instrument that measures vibration of the rotating body subjected to measurement and conducts vibration analysis can prevent leakage of specification data of a measurement target.

BRIEF DESCRIPTION OF DRAWINGS

Fig. 1 is a diagram showing a vibration measurement system according to a first embodiment of the present invention.
Fig. 2 is a diagram showing a configuration of a measurement instrument.
Fig. 3 is a diagram showing a configuration of a portable information terminal.
Fig. 4 is a diagram showing exemplary representation by a display.
Fig. 5 is a diagram showing exemplary information set by a setting unit.
Fig. 6 is a flowchart showing an exemplary procedure in processing in the measurement instrument.
Fig. 7 is a flowchart showing an exemplary procedure in processing in the portable information terminal.
Fig. 8 is a diagram showing an exemplary criterion value in a second embodiment.
Fig. 9 is a diagram showing exemplary information set by the setting unit in the second embodiment.
Fig. 10 is a flowchart showing an exemplary procedure in processing in the portable information terminal in the second embodiment.
Fig. 11 is a diagram showing exemplary information set by the setting unit in a third embodiment.
Fig. 12 is a diagram showing exemplary data stored in a database unit in the third embodiment.
Fig. 13 is a flowchart showing an exemplary procedure in processing in the portable information terminal in the third embodiment.
Fig. 14 is a diagram showing an exemplary configuration of the portable information terminal in a fourth embodiment.
Fig. 15 is a flowchart showing an exemplary procedure in processing in the portable information terminal in the fourth embodiment.
Fig. 16 is a diagram showing another configuration of the vibration measurement system.

DESCRIPTION OF EMBODIMENTS

An embodiment of the present invention will be described in detail below with reference to the drawings. Though a plurality of embodiments will be described below, combination as appropriate of features described in the embodiments is originally intended. The same or corresponding elements in the drawings have the same reference characters allotted and description thereof will not be repeated.

[First Embodiment]

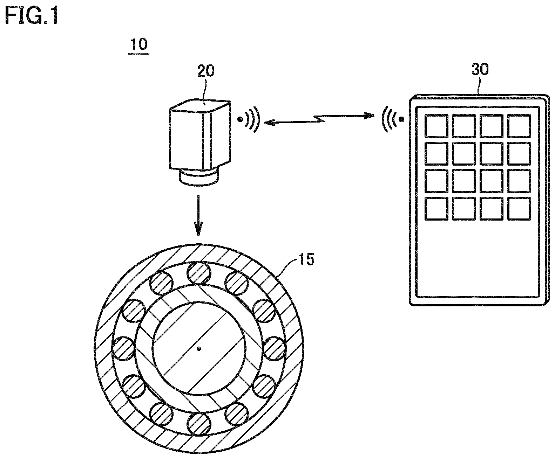

Fig. 1 is a diagram showing a vibration measurement system according to a first embodiment of the present invention. Referring to Fig. 1, a vibration measurement system 10 includes a measurement instrument 20 and a portable information terminal 30.

Measurement instrument 20 is an instrument that measures vibration produced in a rolling bearing 15 subjected to measurement and includes an acceleration sensor (not shown) that detects vibration. Measurement instrument 20 is configured to wirelessly communicate with portable information terminal 30. When measurement instrument 20 receives a measurement start signal from portable information terminal 30, it detects vibration produced in rolling bearing 15 with the acceleration sensor. Then, measurement instrument 20 transmits acceleration data obtained by detection by the acceleration sensor to portable information terminal 30.

Portable information terminal 30 corresponds to the "vibration analysis apparatus" in the present invention, and it receives measurement data (acceleration data of vibration) from measurement instrument 20 and analyzes vibration produced in rolling bearing 15. Portable information terminal 30 is a terminal that can be used by a user who uses vibration measurement system 10, and examples thereof include a smartphone and a tablet. With application software that runs on portable information terminal 30, portable information terminal 30 can be used as the "vibration analysis apparatus."

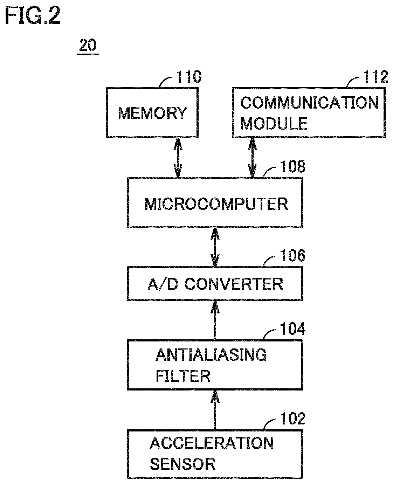

Fig. 2 is a diagram showing a configuration of measurement instrument 20. Referring to Fig. 2, measurement instrument 20 includes an acceleration sensor 102, an antialiasing filter 104, an A/D converter 106, a microcomputer 108, a memory 110, and a communication module 112.

Acceleration sensor 102 is attached to a housing in which rolling bearing 15 (Fig. 1) subjected to measurement is contained, and it detects, and provides output of, an acceleration of vibration produced in rolling bearing 15. Antialiasing filter 104 is a low-pass filter that suppresses aliasing produced in A/D conversion in A/D converter 106. A/D converter 106 converts a measurement signal (an analog signal) that has passed through antialiasing filter 104 to a digital signal.

Microcomputer 108 receives acceleration data converted to the digital signal by A/D converter 106 and provides the acceleration data to memory 110. Then, as a prescribed amount of data is accumulated in memory 110, microcomputer 108 reads accumulated data from memory 110 and communication module 112 transmits the data to portable information terminal 30 as measurement data obtained by measurement instrument 20.

Memory 110 receives acceleration data converted to the digital signal by A/D converter 106 from microcomputer 108, and the acceleration data is temporarily stored in memory 110. Communication module 112 is a wireless module for measurement instrument 20 to wirelessly communicate with portable information terminal 30.

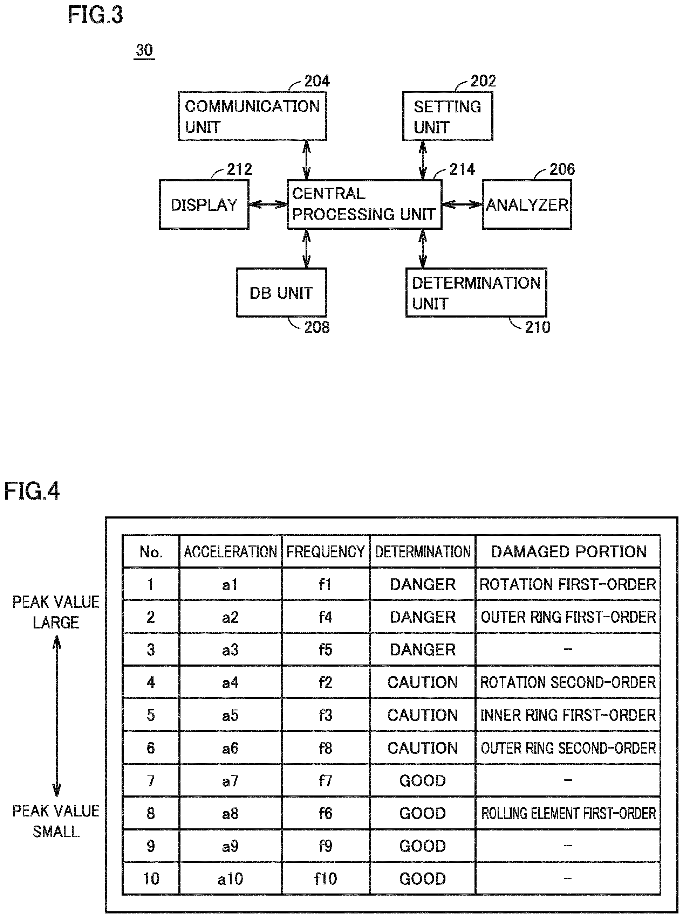

Fig. 3 is a diagram showing a configuration of portable information terminal 30. Referring to Fig. 3, portable information terminal 30 includes a setting unit 202, a communication unit 204, an analyzer 206, a database (DB) unit 208, a determination unit 210, a display 212, and a central processing unit 214.

Setting unit 202 sets information on rolling bearing 15 (Fig. 1) subjected to measurement. Though the set information is entered by a user on a screen of portable information terminal 30 in the present first embodiment, it may be stored in advance in DB unit 208 and read from DB unit 208 at the time of start of measurement of vibration by vibration measurement system 10. Information on rolling bearing 15 includes a bearing model number of rolling bearing 15 and a rotation speed or a rotation frequency of rolling bearing 15 in measurement by measurement instrument 20.

In the present first embodiment, specification data of various bearings that can be subjected to vibration measurement by vibration measurement system 10 is stored in advance in DB unit 208 as being associated with the bearing model numbers. Then, the specification data of the bearing having the bearing model number set by setting unit 202 is read from DB unit 208. Setting unit 202, however, may directly set the specification data of rolling bearing 15 as information on rolling bearing 15.

Setting unit 202 further sets a criterion value for determination by determination unit 210, of a vibration state of rolling bearing 15 subjected to measurement. Though this criterion value is also entered by the user on the screen of portable information terminal 30 in the present first embodiment, it may be stored in advance in DB unit 208 and may be read from DB unit 208 at the time of start of vibration measurement by vibration measurement system 10.

Communication unit 204 is a unit for portable information terminal 30 to establish wireless communication with measurement instrument 20, and it is implemented by a wireless module. Communication unit 204 transmits a measurement start signal to measurement instrument 20 at the time of start of vibration measurement by vibration measurement system 10 in response to an instruction from central processing unit 214. Communication unit 204 receives measurement data (acceleration data) transmitted from measurement instrument 20.

Analyzer 206 conducts frequency analysis of measurement data (acceleration data) received by communication unit 204. By way of example, analyzer 206 performs fast Fourier transform (FFT) processing on time-series acceleration data received by communication unit 204 and generates a frequency spectrum of the measurement data (acceleration data).

Specification data of various bearings that can be subjected to vibration measurement by this vibration measurement system 10 is stored in DB unit 208 as being associated with the bearing model numbers. In the present first embodiment, the specification data includes at least data from which the ball pass frequency of inner ring (BPFI), the ball pass frequency of outer ring (BPFO), and the ball spin frequency (BSF) shown in expressions (1) to (3) below can be calculated.

[Expression 1]

$$BPFI = \frac{Z}{2} f_0 \left( 1 + \frac{d}{D} \cos \alpha \right) \qquad \ldots (1)$$

$$BPFO = \frac{Z}{2} f_0 \left( 1 - \frac{d}{D} \cos \alpha \right) \qquad \ldots (2)$$

$$BSF = f_0 \frac{D}{2d} \left\{ 1 - \left( \frac{d}{D} \right)^2 \cos^2 \alpha \right\} \qquad \ldots (3)$$

D represents a diameter of a pitch circle of the bearing, d represents a diameter of the rolling element, $\alpha$ represents a contact angle of the rolling element, and Z represents the number of rolling elements. f0 represents a rotation frequency of an inner ring shaft and is set by setting unit 202. Alternatively, when setting unit 202 sets the rotation speed, f0 is calculated from the rotation speed.

At least the specification data including diameter D of the pitch circle, diameter d of the rolling element, contact

angle $\alpha$ of the rolling element, and the number Z of rolling elements is stored in DB unit 208 as being associated with the bearing model number. Instead of the specification data, coefficients Cin, Cout, and Crol of rotation frequency f0 for calculating the BPFI, the BPFO, and the BSF may be stored in DB unit 208. Coefficients Cin, Cout, and Crol are shown in expressions (4) to (6) below.

[Expression 2]

$$C_{in} = \frac{Z}{2}\left(1 + \frac{d}{D}\cos\alpha\right) \qquad\qquad \text{... (4)}$$

$$C_{out} = \frac{Z}{2}\left(1 - \frac{d}{D}\cos\alpha\right) \qquad\qquad \text{... (5)}$$

$$C_{rol} = \frac{D}{2d}\left\{1 - \left(\frac{d}{D}\right)^2\cos^2\alpha\right\} \qquad\qquad \text{... (6)}$$

Central processing unit 214 calculates the BPFI, the BPFO, and the BSF of rolling bearing 15 in measurement based on the information on rolling bearing 15 set by setting unit 202. Specifically, central processing unit 214 reads the specification data of the bearing corresponding to the bearing model number set by setting unit 202 from DB unit 208 and calculates the BPFI, the BPFO, and the BSF in accordance with the expressions (1) to (3) based on the read specification data and the rotation speed (or the rotation frequency) set by setting unit 202.

In addition, for peaks in a frequency spectrum of the acceleration data obtained by analyzer 206, central processing unit 214 specifies a part for each peak. More specifically, a peak having a frequency (which is referred to as a "peak frequency" below) that matches with the BPFI and a higher-order component thereof is specified as indicating a fault of the inner ring. A peak having a peak frequency that matches with the BPFO and a higher-order component thereof is specified as indicating a fault of the outer ring, and a peak having a peak frequency that matches with the BSF and a higher-order component thereof is specified as indicating a fault of the rolling element.

A peak having a peak frequency that matches with the rotation frequency of the shaft and a higher-order component thereof is specified as indicating imbalance in the shaft, and a peak having a peak frequency that matches with a frequency twice as high as the rotation frequency and a higher-order component thereof is specified as indicating misalignment. Thus, in the present first embodiment, for a part corresponding to the peak, not only parts of the bearing (the inner ring, the outer ring, and the rolling element) corresponding to the BPFI, the BPFO, and the BSF but also a part other than the bearing itself such as imbalance of the shaft or misalignment is specified.

Determination unit 210 determines the vibration state for each peak based on the peak value (acceleration) of the peak frequency and the criterion value set by setting unit 202. For example, determination unit 210 determines a peak having a peak value exceeding the criterion value as "danger". Determination unit 210 determines a peak having a peak value smaller than the criterion value but exceeding eighty percent of the criterion value as "caution", and determines a peak having a peak value smaller than eighty percent of the criterion value as "good".

Display 212 shows, for peaks having top ten peak values, the peak value, the part, and the result of determination ("danger", "caution", "good", and the like) by determination unit 210 on a screen of portable information terminal 30. The number of shown peaks is not limited to ten, but may be set to other numbers or may be set by a user on the screen of portable information terminal 30 with the default being ten.

In this first embodiment, in accordance with the number of peaks shown by display 212, central processing unit 214 specifies a part for the peaks having the top ten peak values, and determination unit 210 determines the vibration state for the peaks having the top ten peak values. Central processing unit 214, however, may specify the part for all specified peaks and determination unit 210 may determine the vibration state for all specified peaks.

Fig. 4 is a diagram showing exemplary representation by display 212. Fig. 4 shows the screen of portable information terminal 30 on which representation information is shown by display 212.

Referring to Fig. 4, in this example, for peaks having top ten peak values, the peak value (acceleration), the peak frequency, the result of determination by determination unit 210, and the part (damaged portion) are shown in the descending order of magnitude of the peak values (acceleration) (a1 > a2 > ... > a10). The shown peaks include also a peak of a higher-order component ("rotation second-order," "outer ring second-order," and the like).

Though representation is given in the descending order of magnitude of the peak values in the present example, representation may be given in the ascending order of magnitude of the frequency (f1 < f2 < ... < f10). Depending on results of determination, a color used for representation may be different (for example, "danger" shown with red, "caution" shown with yellow, and "good" shown with green).

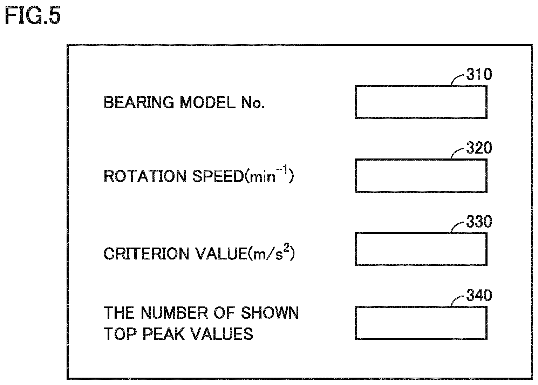

Fig. 5 is a diagram showing exemplary information set by setting unit 202. Information set by setting unit 202 can be entered by a user on the screen of portable information terminal 30, and Fig. 5 shows the screen of portable information terminal 30 for entry of information by the user.

Referring to Fig. 5, the bearing model number of rolling bearing 15 (Fig. 1) subjected to measurement can be entered in an input section 310.

A rotation speed ($min^{-1}$) of the shaft in measurement can be entered in an input section 320. Since vibration measurement system 10 is not provided with a sensor that detects the rotation speed of the shaft in measurement by measurement instrument 20, information on the rotation speed should be obtained and entered in input section 320 in measurement. When a rotation speed sensor is annexed, however, input section 320 does not have to be provided. The rotation frequency of the shaft in measurement instead of the rotation speed of the shaft in measurement may be entered in input section 320.

A criterion value (acceleration) to be used by determination unit 210 can be entered in an input section 330. In the present first embodiment, the criterion value is set to a uniform value regardless of the peak frequency.

The number of peaks having largest peak values to be shown by display 212 can be entered in an input section 340. The number of peaks to be shown by display 212 is set in accordance with this input value. When there is no entry into input section 340, a default value (for example, ten) is set.

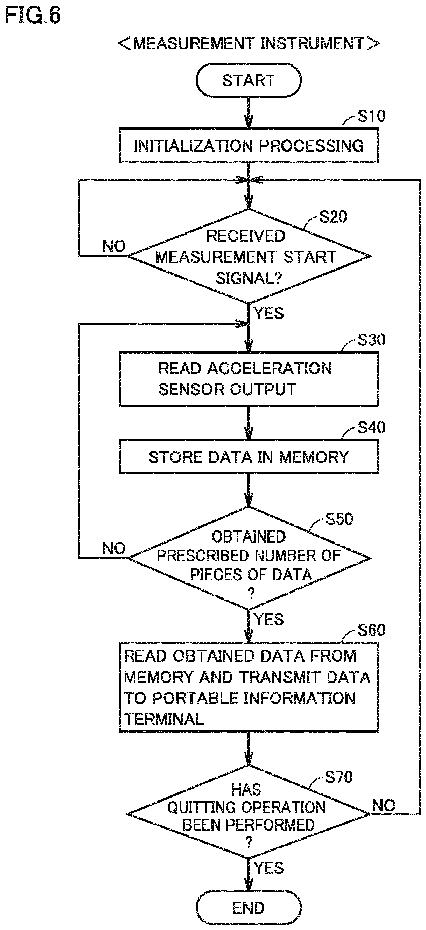

Fig. 6 is a flowchart showing an exemplary procedure in processing in measurement instrument 20. Referring to Fig. 2 together with Fig. 6, when power of measurement instrument 20 is turned on, microcomputer 108 performs prescribed initialization processing (step S10). In the initialization processing, for example, communication between communication module 112 and portable information terminal 30 is established and data in memory 110 is cleared.

Then, microcomputer 108 determines whether or not it has received a measurement start signal from portable information terminal 30 (step S20). Then, when microcomputer 108 has received the measurement start signal (YES in step S20), it reads from A/D converter 106, an output from acceleration sensor 102 that has passed through antialiasing filter 104 and digitally converted by A/D converter 106 (step S30).

Microcomputer 108 has data read from A/D converter 106 temporarily stored in memory 110 (step S40). Then, microcomputer 108 determines whether or not the number of pieces of obtained data has reached a prescribed number (step S50). When the number of pieces of obtained data has not reached the prescribed number (NO in step S50), microcomputer 108 repeats processing in steps S30 and S40.

When microcomputer 108 determines in step S50 that the number of pieces of obtained data has reached the prescribed number (YES in step S50), microcomputer 108 reads obtained data from memory 110 and transmits the data to portable information terminal 30 by means of communication module 112 (step S60).

Then, microcomputer 108 determines whether or not the user has performed a quitting operation to quit measurement (step S70). The quitting operation is performed onto portable information terminal 30, and when the microcomputer receives a measurement quitting signal from portable information terminal 30, it determines that the quitting operation has been performed.

When the microcomputer determines that the quitting operation has not been performed (NO in step S70), the process returns to step S20. When the microcomputer determines that the quitting operation has been performed (YES in step S70), the process proceeds to end and a series of processing in measurement instrument 20 ends.

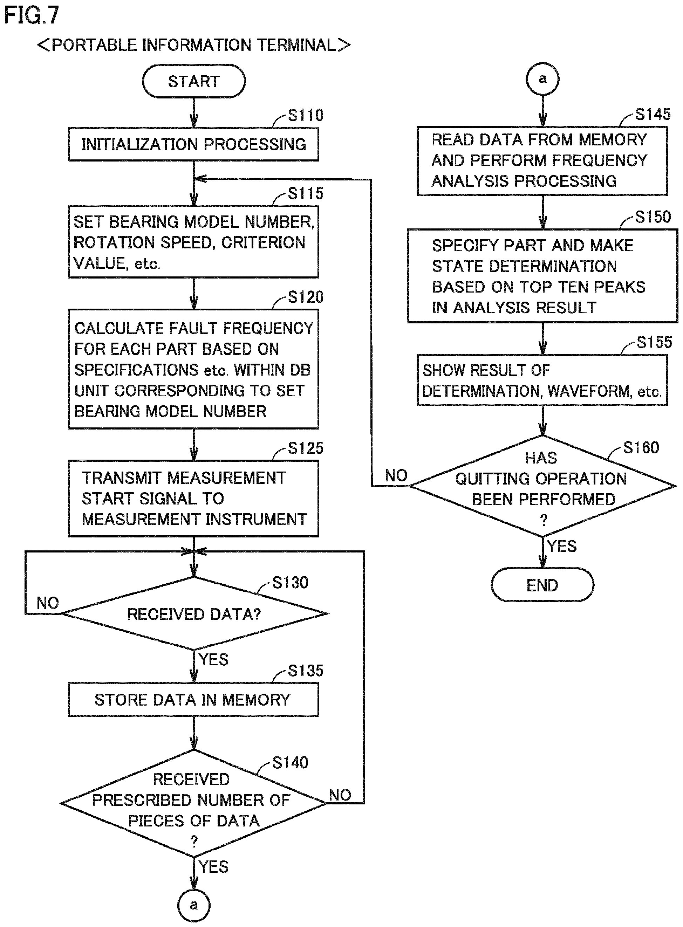

Fig. 7 is a flowchart showing an exemplary procedure in processing in portable information terminal 30. Referring to Fig. 3 together with Fig. 7, when application software for vibration measurement with the use of measurement instrument 20 is launched on portable information terminal 30 and start of measurement is indicated by means of the application software, central processing unit 214 performs prescribed initialization processing (step S110). In the initialization processing, for example, communication between communication unit 204 and measurement instrument 20 is established and prescribed resetting processing is performed.

Then, in response to an instruction from central processing unit 214, setting unit 202 sets the bearing model number of rolling bearing 15 subjected to measurement, the rotation speed (or the rotation frequency) in measurement, the criterion value for determining the vibration state based on measurement data, and the like (step S115). Each set value is entered by a user on the screen of portable information terminal 30.

Then, central processing unit 214 reads specification data of the bearing corresponding to the set bearing model number from DB unit 208 and calculates the BPFI, the BPFO, and the BSF of rolling bearing 15 subjected to measurement in accordance with the expressions (1) to (3) based on the specification data and the rotation frequency calculated from the set rotation speed (step S120). Thereafter, central processing unit 214 transmits the measurement start signal to measurement instrument 20 through communication unit 204 (step S125).

When the measurement start signal is transmitted to measurement instrument 20, central processing unit 214 determines whether or not it has received measurement data (acceleration data) from measurement instrument 20 (step S130). Then, when central processing unit 214 has received the measurement data from measurement instrument 20 (YES in step S130), it has the received measurement data stored in the memory (not shown) (step S135).

Then, central processing unit 214 determines whether or not the number of pieces of measurement data received from measurement instrument 20 has reached a prescribed number (step S 140). When the number of pieces of data has not reached the prescribed number (NO in step S140), the central processing unit repeats processing in steps S130 and S135.

When central processing unit 214 determines in step S140 that the number of pieces of data has reached the prescribed number (YES in step S140), it reads data from the memory and has analyzer 206 conduct frequency analysis of data (acceleration data) resulting from measurement by measurement instrument 20 (step S145). Specifically, fast Fourier transform (FFT) processing is performed on time-series acceleration data obtained by measurement by measurement instrument 20 to obtain a frequency spectrum of the obtained acceleration data.

Then, for peaks in the obtained frequency spectrum, central processing unit 214 extracts top ten peak values and specifies a part corresponding to the peak frequency for the extracted top ten peaks. Specifically, central processing unit 214 specifies for each of the extracted peaks, from which of a fault of the inner ring, a fault of the outer ring, a fault of the rolling element, imbalance of the shaft, and misalignment the peak is derived based on whether or not the peak frequency matches with any of the BPFI, the BPFO, the BSF, and a higher-order component thereof or whether or not it matches with any of the rotation frequency of the shaft, the frequency twice as high as that, and a higher-order component thereof. Then, for each specified part, central processing unit 214 has determination unit 210 determine the vibration state of each part based on the set criterion value (step S150).

For example, determination unit 210 determines a peak having the peak value exceeding the criterion value as "danger". Determination unit 210 determines a peak having the peak value smaller than the criterion value but exceeding eighty percent of the criterion value as "caution" and determines a peak having the peak value smaller than eighty percent of the criterion value as "good".

Then, for each of the peaks having the top ten peak values, central processing unit 214 has display 212 show the result of determination in step S150, the peak value, the peak frequency, and the part on the screen of portable information terminal 30 together with a waveform of the frequency spectrum (step S155).

Then, central processing unit 214 determines whether or not the user has performed the quitting operation to quit measurement (step S160). When the central processing unit determines that the quitting operation has not been performed (NO in step S160), the process returns to step S115. When the central processing unit determines that the quitting operation has been performed (YES in step S160), the process proceeds to end and a series of processing in portable information terminal 30 ends.

As set forth above, in this first embodiment, for the peaks having the top ten peak values in the frequency spectrum of measurement data, the peak value (acceleration), the peak frequency, the result of determination of the vibration state ("danger", "caution", "good", and the like), and the part (damaged portion) are shown on the screen of portable information terminal 30. The user can thus readily know, for a peak large in vibration, magnitude thereof, the part, and the vibration state of the part.

According to this first embodiment, the user can set the number of peaks to be shown, and hence representation as desired by the user can be realized. Since measurement instrument 20 and portable information terminal 30 wirelessly communicate with each other, the user can check a result of vibration analysis at any location within an area where wireless communication can be established, simply by installing measurement instrument 20 in a measurement target.

[Second Embodiment]

In the first embodiment, the criterion value for determining the vibration state ("danger", "caution", "good", and the like) is uniformly set regardless of a frequency. In this second embodiment, the criterion value is set for each frequency band. Thus, diagnosis is conducted based on an appropriate criterion value for each set frequency band, and diagnosis for the frequency band to which a user desires to pay attention can be provided.

An overall configuration of the vibration measurement system according to this second embodiment is similar to that in the first embodiment shown in Figs. 1 to 3.

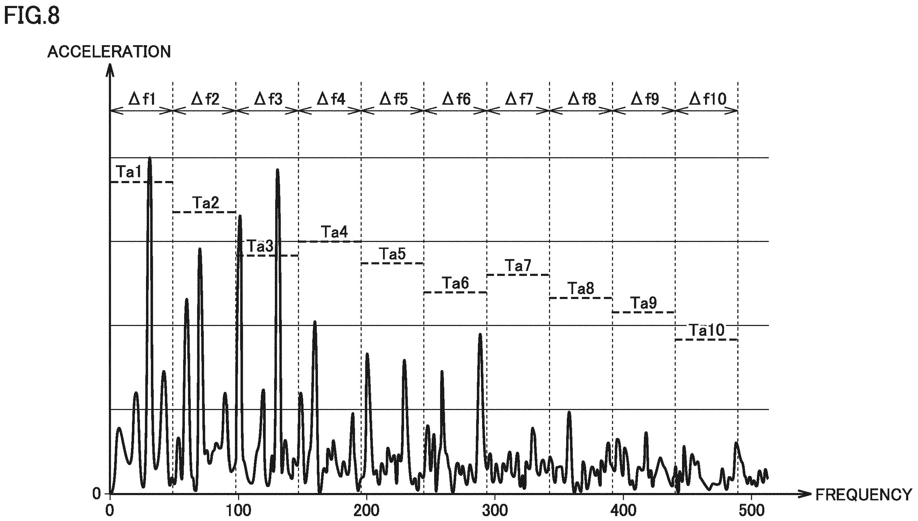

Fig. 8 is a diagram showing an exemplary criterion value in the second embodiment. In Fig. 8, the abscissa represents a frequency and the ordinate represents an acceleration (vibration). Referring to Fig. 8, a waveform represents an exemplary result of frequency analysis conducted by analyzer 206.

A criterion value $Tai$ (i = 1 to 10) is set for each frequency band $\Delta fi$ (i = 1 to 10). In this example, ten frequency bands equal in width are set from a frequency 0, and the criterion value is set for each frequency band. The number of frequency bands, however, is not limited to ten, and the width of each frequency band does not necessarily have to be equal either.

In determining frequency band $\Delta fi$, for example, the width and the number of frequency bands may be set with the width of each frequency band being set to be equal, or an upper limit of a frequency to be analyzed may be set with the number of frequency bands being set to a certain number.

Then, by setting the criterion value for each set frequency band, for a frequency band to which a user desires to pay attention, an appropriate result of diagnosis can be provided to the user.

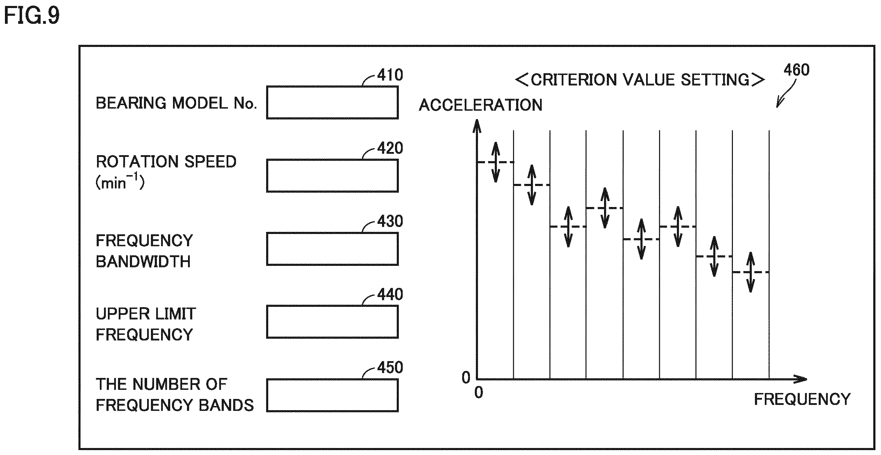

Fig. 9 is a diagram showing exemplary information set by setting unit 202 in the second embodiment. In the second embodiment as well, the user can enter the information set by setting unit 202 on the screen of portable information terminal 30, and Fig. 9 shows the screen of portable information terminal 30 for entry of information by the user.

Referring to Fig. 9, in an input section 410, the bearing model number of rolling bearing 15 (Fig. 1) subjected to measurement can be entered. In an input section 420, a rotation speed (min$^{-1}$) of the shaft in measurement can be entered. The rotation frequency of the shaft in measurement instead of the rotation speed of the shaft in measurement may be entered in input section 420.

In an input section 430, for determination as to the vibration state to be made based on the criterion value set for each frequency band, in setting an equal width of the frequency band, that width of the frequency band can be entered. In an input section 440, in setting the certain number of frequency bands, the upper limit of the frequency to be analyzed can be entered. The user should only provide entry into any one of input sections 430 and 440. If entry is provided into both of input sections 430 and 440, a value in predetermined one of them (for example, input section 430) is adopted.

In an input section 450, the number of frequency bands can be entered. When a frequency bandwidth has been set by entry into input section 430, frequency band(s) having the frequency bandwidth as many as the number entered into input section 450 is (are) set. When the upper limit frequency has been set by entry into input section 440, by dividing the upper limit frequency by the number entered into input section 450, the frequency band(s) as many as the number entered into input section 450 is (are) set.

In an input section 460, the criterion value can be set for each frequency band. In input section 460, each frequency band set based on the frequency bandwidth entered in input section 430 or the upper limit frequency entered in input section 440 and on the number of frequency bands entered in input section 450 is shown, and the criterion value is shown for each frequency band. The criterion value shown in input section 460 can be moved up and down by using an input device (a mouse, a touch panel, or the like). The user can set in input section 460, the criterion value for each frequency band by using the input device.

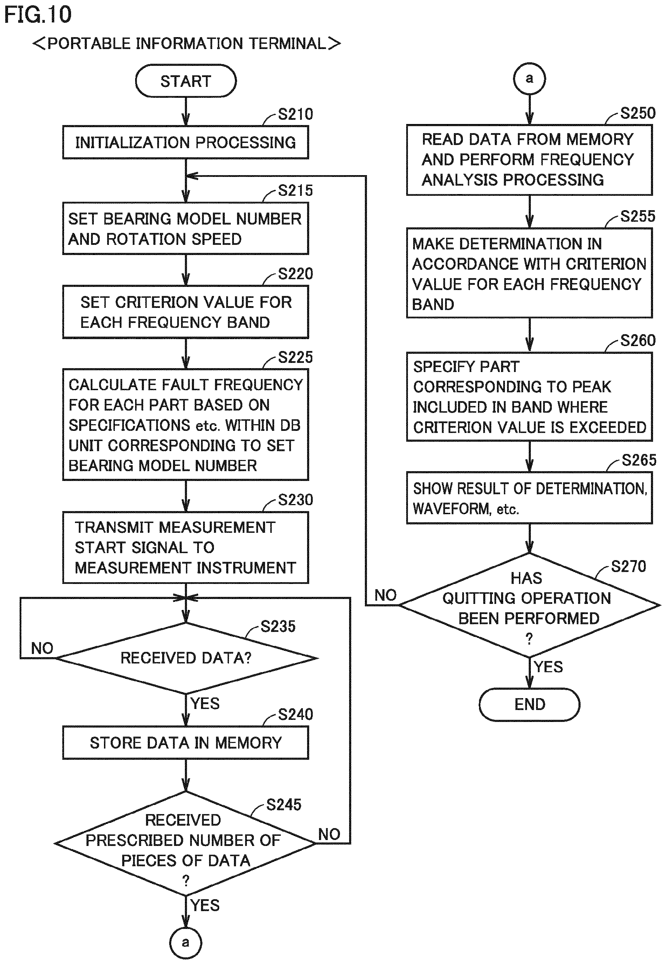

Fig. 10 is a flowchart showing an exemplary procedure in processing in portable information terminal 30 in the second embodiment. Referring to Fig. 3 together with Fig. 10, in the second embodiment as well, when application software for vibration measurement with the use of measurement instrument 20 is launched on portable information terminal 30 and start of measurement is indicated by means of the application software, central processing unit 214 performs prescribed initialization processing (step S210). This initialization processing is the same as the processing performed in step S110 in Fig. 7.

Then, in response to an instruction from central processing unit 214, setting unit 202 sets the bearing model number of rolling bearing 15 subjected to measurement, the rotation speed (or the rotation frequency) in measurement, and the like (step S215). Each set value is entered by a user on the screen of portable information terminal 30.

Furthermore, setting unit 202 sets the criterion value for each frequency band (step S220). As described with reference to Fig. 9, each frequency band is set based on input values in input sections 430 and 450, and the criterion value for each frequency band is set based on entry into input section 460.

When the criterion value is set for each frequency band in step S220, the process proceeds to step S225. Since processing in steps S225 to S250 is the same as the processing in steps S120 to S145 in Fig. 7, description will not be repeated.

When frequency analysis of data (acceleration data) obtained by measurement by measurement instrument 20 is conducted in step S250, central processing unit 214 has determination unit 210 determine the vibration state of rolling bearing 15 for each frequency band based on the criterion value for each frequency band set in step S220 (step S255).

For example, when there is a peak having the peak value exceeding the criterion value for each frequency band, determination as "danger" is made. When there is a peak having the peak value exceeding eighty percent of the criterion value although there is no peak having the peak value exceeding the criterion value, determination as "caution" is made, and when there is no peak having the peak value exceeding eighty percent of the criterion value, determination as "good" is made.

Then, for the peak having the peak value exceeding the criterion value, central processing unit 214 specifies a part corresponding to the peak (step S260). Specifically, central processing unit 214 specifies, for each peak having the peak value exceeding the criterion value, from which of a fault of the inner ring, a fault of the outer ring, a fault of the rolling element, imbalance of the shaft, and misalignment the peak is derived based on whether or not the peak frequency matches with any of the BPFI, the BPFO, the BSF, and a higher-order component thereof or whether or not it matches with any of the rotation frequency of the shaft, the frequency twice as high as that, and a higher-order component thereof.

Then, for each peak having the peak value exceeding the criterion value, central processing unit 214 has display 212 show the result of determination in step S255, the peak value, the peak frequency, and the part on the screen of portable information terminal 30, together with a waveform of the frequency spectrum (step S265).

Then, central processing unit 214 determines whether or not the user has performed the quitting operation to quit measurement (step S270). When the central processing unit determines that the quitting operation has not been performed (NO in step S270), the process returns to step S215. When the central processing unit determines that the quitting operation has been performed (YES in step S270), the process proceeds to end and a series of processing in portable information terminal 30 ends.

As set forth above, in this second embodiment, the criterion value is set for each frequency band, and in each frequency band, the vibration state is determined based on the peak value of the frequency spectrum and the criterion value. Thus, diagnosis is conducted based not on a specific frequency component produced by an abnormal condition (a fault of the inner ring, the outer ring, the rolling element, or the cage) of the bearing, but on an appropriate criterion value for each set frequency band. Therefore, according to this second embodiment, a result of diagnosis for a frequency band to which a user desires to pay attention can be provided.

Since measurement instrument 20 and portable information terminal 30 wirelessly communicate with each other also in this second embodiment, the user can check a result of vibration analysis at any location within an area where wireless communication can be established simply by installing measurement instrument 20 in a measurement target.

[Third Embodiment]

An overall configuration of the vibration measurement system according to a third embodiment is similar to that in the first embodiment shown in Figs. 1 to 3.

In the third embodiment, for various bearings that can be subjected to vibration measurement by vibration measurement system 10, data on a coefficient of a rotation frequency (a plurality of constants obtained by dividing the coefficient) of the bearing for calculating a damage frequency for specifying a damaged part of the bearing in accordance with a prescribed arithmetic expression based on specification data of the bearing is stored in DB unit 208 as being associated with a bearing model number. Then, the data corresponding to the bearing model number set by setting unit 202 is read from DB unit 208, the damage frequency is calculated based on the read data, and the damaged part is specified.

Referring again to Fig. 3, in the present third embodiment, data on the coefficient of the rotation frequency of the shaft for calculation of a ball pass frequency of inner ring (BPFI), a ball pass frequency of outer ring (BPFO), and a ball spin frequency (BSF) of rolling bearing 15 subjected to measurement is stored in DB unit 208 as being associated with the bearing model number.

Specifically, in this third embodiment, the server is not used but portable information terminal 30 specifies a damaged part. Therefore, the coefficient of the rotation frequency of the bearing for calculating the BPFI, the BPFO, and the BSF of rolling bearing 15 subjected to measurement should be held in portable information terminal 30.

The BPFI, the BPFO, and the BSF of rolling bearing 15 can be calculated in accordance with expressions (7) to (9) below, based on various specifications of rolling bearing 15 and rotation frequency f0 of an inner ring shaft of the bearing in measurement.

[Expression 3]

$$BPFI = \frac{Z}{2} f_0 \left( 1 + \frac{d}{D} \cos \alpha \right) = C_{in} \times f_0 \qquad \ldots (7)$$

$$BPFO = \frac{Z}{2} f_0 \left( 1 - \frac{d}{D} \cos \alpha \right) = C_{out} \times f_0 \qquad \ldots (8)$$

$$BSF = f_0 \frac{D}{2d} \left\{ 1 - \left( \frac{d}{D} \right)^2 \cos^2 \alpha \right\} = C_{rol} \times f_0 \qquad \ldots (9)$$

D represents a diameter of a pitch circle of the bearing, d represents a diameter of the rolling element, $\alpha$ represents a contact angle of the rolling element, Z represents the number of rolling elements, and each value corresponds to the specifications of rolling bearing 15.

Rotation frequency f0 corresponds to a measurement condition, and is set by setting unit 202. When setting unit 202 sets the rotation speed, rotation frequency f0 is calculated from the set rotation speed. Coefficients Cin, Cout, and Crol of rotation frequency f0 are calculated based on the specifications (diameter D of the pitch circle of the bearing, diameter d of the rolling element, contact angle $\alpha$ of the rolling element, and the number Z of rolling elements) of rolling bearing 15.

Thus, in order to calculate the BPFI, the BPFO, and the BSF in portable information terminal 30, the specification data (diameter D of the pitch circle of the bearing, diameter d of the rolling element, contact angle $\alpha$ of the rolling element, and the number Z of rolling elements) of rolling bearing 15 or coefficients Cin, Cout, and Crol calculated based on the specification data should be held in portable information terminal 30.

Specifications of a measurement target, however, are accumulation of know-how of a manufacturer. Therefore, sufficient attention should be paid to prevention of leakage of specification data or coefficients Cin, Cout, and Crol calculated based on the specification data.

Then, in vibration measurement system 10 according to the present third embodiment, each of coefficients Cin, Cout, and Crol is stored in DB unit 208 of portable information terminal 30 as being divided into a plurality of constants. For example, coefficients Cin, Cout, and Crol are stored in DB unit 208 as being divided into constants Ca to Cd shown in expressions (10) to (12) below.

[Expression 4]

$$C_{in} = C_a + C_b \qquad \qquad \ldots (10)$$

$$C_{out} = C_a - C_b \qquad \qquad \ldots (11)$$

$$C_{rol} = C_c - C_d \qquad \qquad \ldots (12)$$

Constants Ca to Cd are as below.

[Expression 5]

$$C_a = \frac{Z}{2} \qquad \qquad \ldots (13)$$

$$C_b = \frac{Z \times d \times \cos \alpha}{2D} \qquad \qquad \ldots (14)$$

$$C_c = \frac{D}{2d} \qquad \qquad \ldots (15)$$

$$C_d = \frac{d \times \cos^2 \alpha}{2D} \qquad \qquad \ldots (16)$$

By thus storing coefficients Cin, Cout, and Crol calculated based on the specification data as being divided into the plurality of constants Ca to Cd in DB unit 208, elucidation of the specifications of rolling bearing 15 subjected to measurement in the event of leakage of data stored in DB unit 208 to the outside can be prevented.

In the present third embodiment, central processing unit 214 calculates the BPFI, the BPFO, and the BSF of rolling bearing 15 in measurement based on the information on rolling bearing 15 set by setting unit 202. Specifically, central processing unit 214 reads the plurality of constants Ca to Cd corresponding to the bearing model number set by setting unit 202 from DB unit 208 and restores coefficients Cin, Cout, and Crol in accordance with the expressions (10) to (12) from the read plurality of constants Ca to Cd. Then, central processing unit 214 calculates the BPFI, the BPFO, and the BSF in accordance with the expressions (7) to (9) based on restored coefficients Cin, Cout, and Crol and the rotation speed (or the rotation frequency) set by setting unit 202.

In the present third embodiment, for the peak for which the part has been specified, display 212 shows the peak value, the part, and the result of determination ("danger", "caution", "good", and the like) by determination unit 210 on the screen of portable information terminal 30.

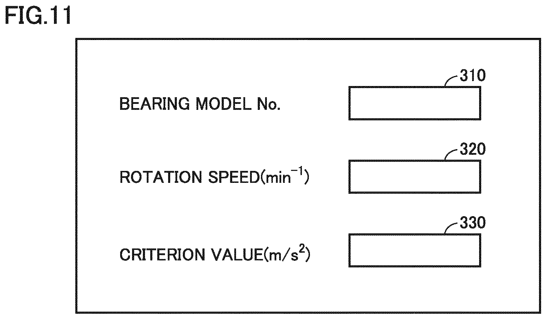

Fig. 11 is a diagram showing exemplary information set by setting unit 202 in the third embodiment. Information set by setting unit 202 can be entered by a user on the screen of portable information terminal 30, and Fig. 11 shows the screen of portable information terminal 30 for entry of information by the user.

Referring to Fig. 11, the bearing model number of rolling bearing 15 (Fig. 1) subjected to measurement can be entered in input section 310.

A rotation speed (min$^{-1}$) of the shaft in measurement can be entered in input section 320. Since vibration measurement system 10 is not provided with a sensor that detects the rotation speed of the shaft in measurement by measurement instrument 20, information on the rotation speed should be obtained and entered in input section 320 in measurement. When a rotation speed sensor is annexed, however, input section 320 does not have to be provided. The rotation frequency of the shaft in measurement instead of the rotation speed of the shaft in measurement may be entered in input section 320.

A criterion value (acceleration) to be used by determination unit 210 can be entered in input section 330. In the present third embodiment as well, the criterion value is set to a uniform value regardless of the peak frequency.

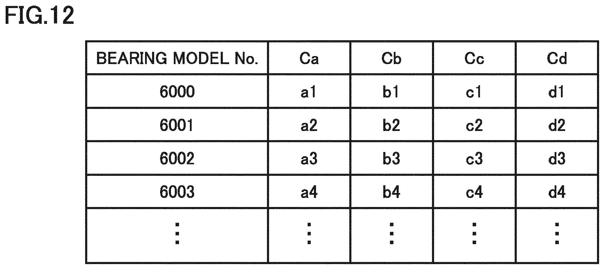

Fig. 12 is a diagram showing exemplary data stored in DB unit 208 in the third embodiment. Referring to Fig. 12, the plurality of constants Ca to Cd obtained by division of coefficients Cin, Cout, and Crol for calculating the BPFI, the BPFO, and the BSF are stored in DB unit 208 as being associated with the bearing model number for each bearing that can be subjected to vibration measurement by vibration measurement system 10. Even if such constants Ca to Cd may be leaked to the outside of portable information terminal 30, elucidation of the specifications of the bearing can be prevented.

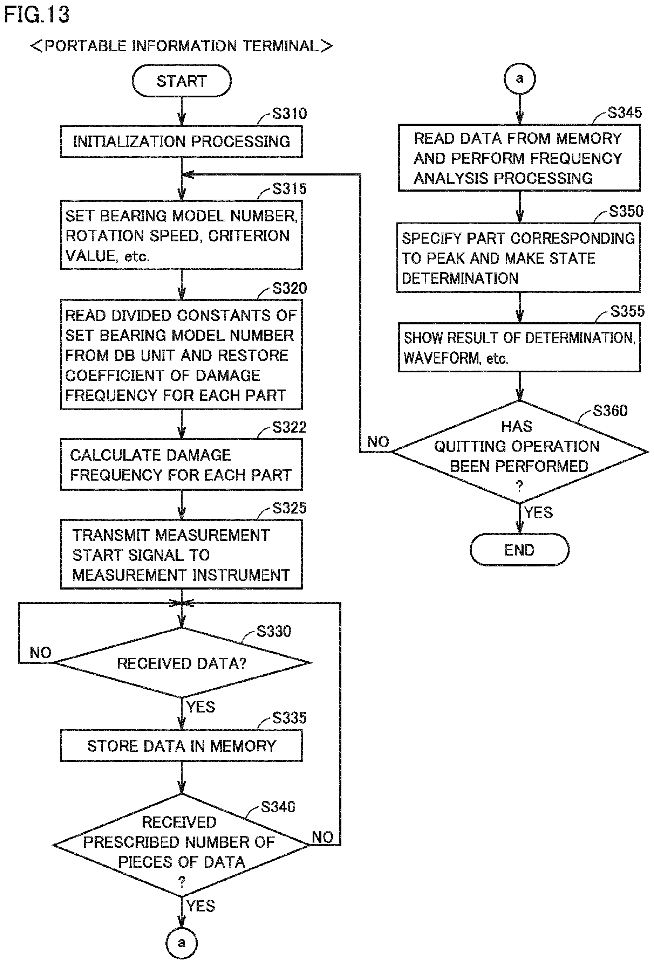

Fig. 13 is a flowchart showing an exemplary procedure in processing in portable information terminal 30. Referring to Fig. 3 together with Fig. 13, when application software for vibration measurement with the use of measurement instrument 20 is launched on portable information terminal 30 and start of measurement is indicated by means of the application software, central processing unit 214 performs prescribed initialization processing (step S310). In the initialization processing, for example, communication between communication unit 204 and measurement instrument 20 is established and prescribed resetting processing is performed.

Then, in response to an instruction from central processing unit 214, setting unit 202 sets the bearing model number of rolling bearing 15 subjected to measurement, the rotation speed (or the rotation frequency) in measurement, the criterion value for determining the vibration state based on measurement data, and the like (step S315). Each set value is entered by a user on the screen of portable information terminal 30.

Then, central processing unit 214 reads constants Ca to Cd (divided constants) of the bearing corresponding to the set bearing model number from DB unit 208 and restores coefficients Cin, Cout, and Crol in accordance with the expressions (10) to (12) from read constants Ca to Cd (step S320).

Then, central processing unit 214 calculates the BPFI, the BPFO, and the BSF of rolling bearing 15 subjected to measurement in accordance with the expressions (7) to (9) based on restored coefficients Cin, Cout, and Crol and the rotation frequency calculated from the rotation speed set in step S315 (step S322). Thereafter, central processing unit 214 transmits the measurement start signal to measurement instrument 20 through communication unit 204 (step S325).

When the measurement start signal is transmitted to measurement instrument 20, central processing unit 214 determines whether or not it has received measurement data (acceleration data) from measurement instrument 20 (step S330). Then, when central processing unit 214 has received the measurement data (YES in step S330), it has the received measurement data stored in the memory (not shown) (step S335).

Then, central processing unit 214 determines whether or not the number of pieces of measurement data received from measurement instrument 20 has reached a prescribed number (step S340). When the number of pieces of data has not reached the prescribed number (NO in step S340), the central processing unit repeats processing in steps S330 and S335.

When central processing unit 214 determines in step S340 that the number of pieces of data has reached the prescribed number (YES in step S340), it reads data from the memory and has analyzer 206 conduct frequency analysis of data (acceleration data) obtained by measurement by measurement instrument 20 (step S345). Specifically, fast Fourier transform (FFT) processing is performed on time-series acceleration data obtained by measurement by measurement instrument 20 to obtain a frequency spectrum of obtained acceleration data.

Then, for peaks in the obtained frequency spectrum, central processing unit 214 specifies from which of a fault of the inner ring, a fault of the outer ring, a fault of the rolling element, imbalance of the shaft, and misalignment the peak is derived based on whether or not the peak frequency matches with any of the BPFI, the BPFO, the BSF, and a higher-order component thereof or whether or not it matches with any of the rotation frequency of the shaft, the frequency twice as high as that, and a higher-order component thereof. Then, for each specified part, central processing unit 214 has determination unit 210 determine the vibration state of each part based on the criterion value set in step S315 (step S350).

For example, determination unit 210 determines a peak having the peak value exceeding the criterion value as "danger". Determination unit 210 determines a peak having the peak value smaller than the criterion value but exceeding eighty percent of the criterion value as "caution" and determines a peak having the peak value smaller than eighty percent of the criterion value as "good".

Then, central processing unit 214 has display 212 show the result of determination in step S350, the peak value, the peak frequency, and the part on the screen of portable information terminal 30, together with a waveform of the frequency spectrum (step S355).

Then, central processing unit 214 determines whether or not the user has performed the quitting operation to quit measurement (step S360). When the central processing unit determines that the quitting operation has not been performed (NO in step S360), the process returns to step S315. When the central processing unit determines that the quitting operation has been performed (YES in step S360), the process proceeds to end and a series of processing in portable information terminal 30 ends.

As set forth above, in this third embodiment, coefficients Cin, Cout, and Crol for calculating the BPFI, the BPFO, and the BSF are stored in DB unit 208 as being divided into the plurality of constants Ca to Cd. Then, in vibration analysis, constants Ca to Cd are read from DB unit 208 to restore coefficients Cin, Cout, and Crol, and the BPFI, the BPFO, and the BSF are calculated based on restored coefficients Cin, Cout, and Crol. Thus, elucidation of specifications of the bearing that can be subjected to measurement by vibration measurement system 10 in the event of leakage of data (constants Ca to Cd) stored in DB unit 208 to the outside of portable information terminal 30 can be prevented. Therefore, according to this third embodiment, leakage of specification data of the bearing can be prevented.

Since measurement instrument 20 and portable information terminal 30 wirelessly communicate with each other also in this third embodiment, the user can check a result of vibration analysis at any location within an area where wireless communication can be established simply by installing measurement instrument 20 in a measurement target.

[Fourth Embodiment]

In the third embodiment, each of coefficients Cin, Cout, and Crol used for calculation of the BPFI, the BPFO, and the BSF is stored in DB unit 208 as being divided into the plurality of constants Ca to Cd. In this fourth embodiment, specification data (diameter D of the pitch circle of the bearing, diameter d of the rolling element, contact angle $\alpha$ of the rolling element, and the number Z of rolling elements) of rolling bearing 15 subjected to measurement is stored in DB unit 208 as being encrypted. Then, in measurement, the encrypted specification data is read from DB unit 208 and decrypted to calculate the BPFI, the BPFO, and the BSF.

An overall configuration of the vibration measurement system according to this fourth embodiment is similar to that in the first embodiment shown in Figs. 1 and 2.

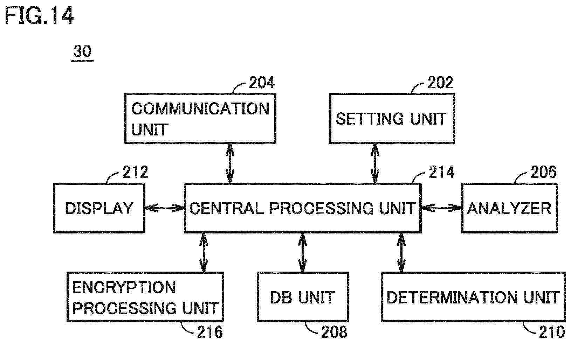

Fig. 14 is a diagram showing a configuration of portable information terminal 30 in the fourth embodiment. Referring to Fig. 14, in portable information terminal 30 in the first embodiment shown in Fig. 3, portable information terminal 30 in the fourth embodiment further includes an encryption processing unit 216.

In the present fourth embodiment, for various bearings that can be subjected to vibration measurement by vibration measurement system 10, specification data encrypted in accordance with prescribed cryptography is stored in DB unit 208 as being associated with bearing model numbers. Symmetric key cryptography or public key cryptography may be adopted as cryptography. Encryption may be done by using identical key encryption for various specifications or by using key encryption different for each specification. Various known approaches can be used for cryptography.

Then, in response to an instruction from central processing unit 214, encryption processing unit 216 reads specification data (encrypted data) corresponding to the bearing model number set by setting unit 202 from DB unit 208 and decrypts the read specification data by using key encryption in accordance with the cryptography.

Central processing unit 214 calculates the BPFI, the BPFO, and the BSF in accordance with the expressions (7) to (9) based on the specification data decrypted by encryption processing unit 216 and the rotation speed (or the rotation frequency) set by setting unit 202. Processing by central processing unit 214 after calculation of the BPFI, the BPFO, and the BSF is the same as in the third embodiment.

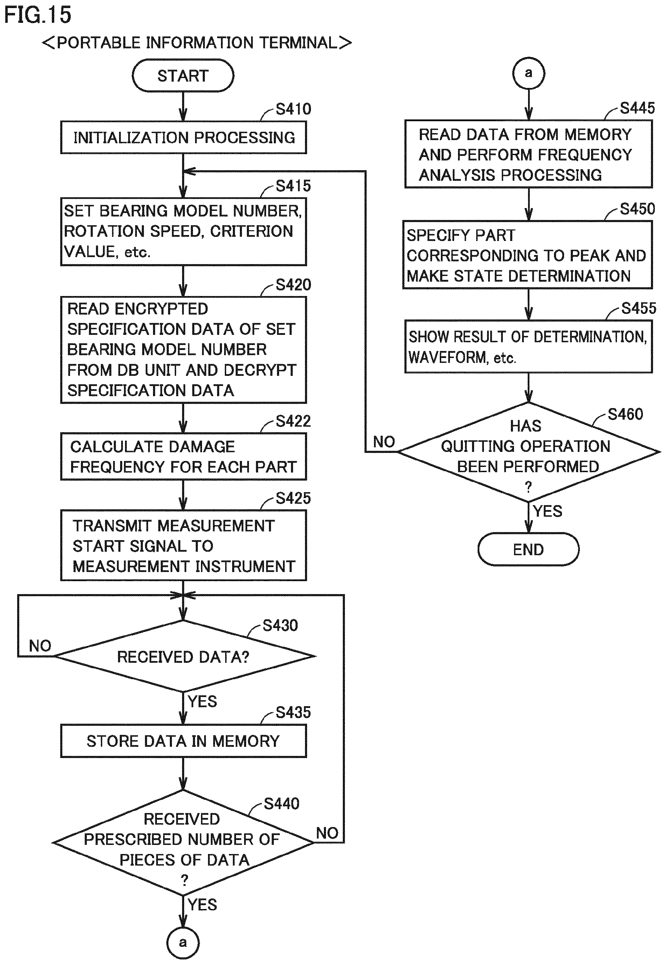

Fig. 15 is a flowchart showing an exemplary procedure in processing in portable information terminal 30 in the fourth embodiment. Referring to Fig. 14 together with Fig. 15, in the fourth embodiment as well, when application software for vibration measurement with the use of measurement instrument 20 is launched on portable information terminal 30 and start of measurement is indicated by means of the application software, central processing unit 214 performs prescribed initialization processing (step S410). Thereafter, setting unit 202 sets the bearing model number of rolling bearing 15 subjected to measurement, the rotation speed (or the rotation frequency) in measurement, the criterion value for determining the vibration state based on measurement data, and the like (step S415). Processing performed in steps S410 and S415 is the same as the processing performed in steps S310 and S315 in Fig. 13.

Then, the specification data (encrypted data) of the bearing corresponding to the set bearing model number is read from DB unit 208, and encryption processing unit 216 decrypts the encrypted specification data by using key encryption in accordance with prescribed cryptography (step S420).

Then, central processing unit 214 calculates the BPFI, the BPFO, and the BSF of rolling bearing 15 subjected to measurement in accordance with the expressions (7) to (9) based on the decrypted specification data and the rotation frequency calculated from the rotation speed set in step S415 (step S422).

When the BPFI, the BPFO, and the BSF are calculated in step S422, the process proceeds to step S425. Since processing in steps S425 to S455 is the same as the processing in steps S325 to S355 in Fig. 13, description will not be repeated.

As representation by display 212 is provided in step S455, central processing unit 214 determines whether or not the user has performed the quitting operation to quit measurement (step S460). When the central processing unit determines that the quitting operation has not been performed (NO in step S460), the process returns to step S415. When the central processing unit determines that the quitting operation has been performed (YES in step S460), the process proceeds to end and a series of processing in portable information terminal 30 ends.

As set forth above, in this fourth embodiment, specification data of rolling bearing 15 subjected to measurement is stored as being encrypted in DB unit 208. Then, in vibration analysis, the encrypted specification data is read from DB unit 208 and decrypted, and the BPFI, the BPFO, and the BSF are calculated based on the decrypted specification data. Thus, elucidation of the specifications of the bearing that can be subjected to measurement by vibration measurement system 10 in the event of leakage of data (encrypted specification data) stored in DB unit 208 to the outside of portable information terminal 30 can be prevented. Therefore, according to this fourth embodiment as well, leakage of specification data of the bearing can be prevented.

Since measurement instrument 20 and portable information terminal 30 wirelessly communicate with each other also in this fourth embodiment, the user can check a result of vibration analysis at any location within an area where wireless communication can be established simply by installing measurement instrument 20 in a measurement target.

Though the specification data of the measurement target is stored in DB unit 208 as being encrypted in the fourth embodiment, coefficients Cin, Cout, and Crol for calculating the BPFI, the BPFO, and the BSF may be stored in DB unit 208 as being encrypted, or the plurality of constants Ca to Cd obtained by division of coefficients Cin, Cout, and Crol described in the third embodiment may be stored in DB unit 208 as being encrypted.

In the third embodiment, the plurality of constants Ca to Cd may be stored in DB unit 208 in a binary format. Elucidation of the specifications of the bearing that can be subjected to measurement by vibration measurement system 10 in the event of leakage of data stored in DB unit 208 to the outside of portable information terminal 30 can thus also be prevented.

Furthermore, in the fourth embodiment, the specification data in the binary format may be stored in DB unit 208 as being encrypted. Alternatively, coefficients Cin, Cout, and Crol in the binary format or the plurality of constants Ca to Cd in the binary format may be stored in DB unit 208 as being encrypted.

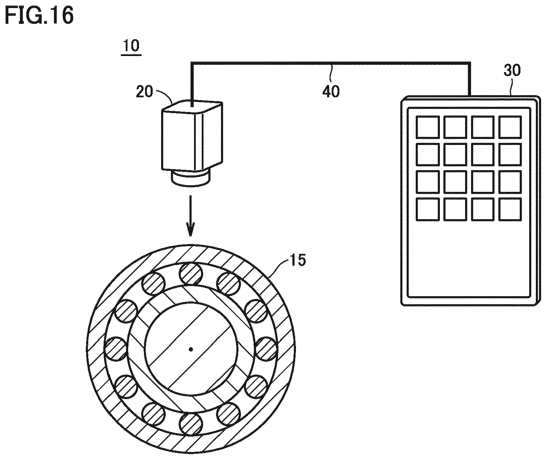

Though measurement instrument 20 and portable information terminal 30 wirelessly communicate with each other in each embodiment above, measurement instrument 20 and portable information terminal 30 may be connected to each other through a communication line 40 as shown in Fig. 16, and measurement instrument 20 and portable information terminal 30 may communicate with each other through communication line 40.

Combination as appropriate of the embodiments disclosed herein is originally intended so long as such combination is not technically inconsistent. It should be understood that the embodiments disclosed herein are illustrative and non-restrictive in every respect. The scope of the present invention is defined by the terms of the claims.

REFERENCE SIGNS LIST

10 vibration measurement system; 15 measurement target (rolling bearing); 20 measurement instrument; 30 portable information terminal; 40 communication line; 102 acceleration sensor; 104 antialiasing filter; 106 A/D converter; 108 microcomputer; 110 memory; 112 communication module; 202 setting unit; 204 communication unit; 206 analyzer; 208 DB unit; 210 determination unit; 212 display; 214 central processing unit; 216 encryption processing unit; 310 to 340, 410 to 460 input section

**Claims**

1. A vibration analysis apparatus (30) that receives measurement data from a measurement instrument (20) and conducts vibration analysis, the measurement instrument measuring vibration of a rotating body (15) subjected to measurement, the vibration analysis apparatus comprising:

   a setting unit (202) that sets information on the rotating body and a criterion value for diagnosing a vibration state of the rotating body;
   an analyzer (206) that conducts frequency analysis of the measurement data received from the measurement instrument;
   a processor (214) that specifies, for a prescribed number of peaks largest in peak value in a descending order in a frequency spectrum obtained by the frequency analysis, a part based on the information on the rotating body;
   a determination unit (210) that determines, for the prescribed number of peaks, the vibration state based on the peak value and the criterion value; and
   a display (212) that shows, for the prescribed number of peaks, the peak value, the part, and a result of determination by the determination unit.

2. The vibration analysis apparatus according to claim 1, wherein
   the prescribed number is set by a user who uses the vibration analysis apparatus.

**3.** A vibration analysis (30) apparatus that receives measurement data from a measurement instrument (20) and conducts vibration analysis, the measurement instrument measuring vibration of a rotating body (15) subjected to measurement, the vibration analysis apparatus comprising:

> a setting unit (202) that sets information on the rotating body, a plurality of frequency bands for which vibration analysis is conducted, and a plurality of criterion values provided in correspondence with the plurality of frequency bands, respectively;
> an analyzer (206) that conducts frequency analysis of the measurement data received from the measurement instrument;
> a determination unit (210) that determines, in each frequency band of the plurality of frequency bands, a vibration state in the frequency band based on a peak value of a frequency spectrum obtained by the frequency analysis and a criterion value corresponding to the frequency band; and
> a processor (214) that controls processing of the setting unit, the analyzer and the determination unit.

**4.** The vibration analysis apparatus according to claim 3, wherein
the plurality of frequency bands are set by a user who uses the vibration analysis apparatus.

**5.** The vibration analysis apparatus according to any one of claims 1 to 4, further comprising a database unit (208) in which a coefficient of a rotation frequency of the rotating body is stored as being divided into a plurality of constants, the coefficient being for calculating a damage frequency representing a frequency of vibration periodically produced in accordance with a damaged part of the rotating body, wherein
in the vibration analysis, the processor further reads the plurality of constants from the database unit to restore the coefficient and calculates the damage frequency based on the restored coefficient.

**6.** The vibration analysis apparatus according to claim 5, wherein

> in the database unit, encrypted data resulting from encryption of the plurality of constants is stored, and
> the processor reads the encrypted data from the database unit to decrypt the encrypted data and restores the coefficient from the plurality of constants that have been decrypted.

**7.** The vibration analysis apparatus according to claim 5, wherein
the plurality of constants are stored in the database unit in a binary format.

**8.** The vibration analysis apparatus according to any one of claims 1 to 4, further comprising a database unit (208) in which encrypted data resulting from encryption of specification data of the rotating body is stored, wherein
in the vibration analysis, the processor further reads the encrypted data from the database unit to decrypt the encrypted data, and calculates a damage frequency representing a frequency of vibration periodically produced in accordance with a damaged part of the rotating body based on the specification data that has been decrypted.

**9.** The vibration analysis apparatus according to claim 8, wherein
in the database unit, the encrypted data resulting from encryption of the specification data in a binary format is stored.

**10.** The vibration analysis apparatus according to any one of claims 1 to 9, wherein
the rotating body is a bearing.

**11.** The vibration analysis apparatus according to claim 10, wherein
the information on the rotating body includes

> a rotation speed or a rotation frequency of the bearing, and
> a specification of the bearing or a coefficient of the rotation frequency used for calculation of a BPFI, a BPFO, and a BSF of the bearing.

**12.** The vibration analysis apparatus according to any one of claims 1 to 11, further comprising a communication unit (204) that wirelessly communicates with the measurement instrument.

**13.** A vibration measurement system comprising:

> a measurement instrument (20) that measures vibration of a rotating body (15) subjected to measurement; and

the vibration analysis apparatus (30) according to any one of claims 1 to 12 that receives measurement data from the measurement instrument and conducts vibration analysis.

**Patentansprüche**

1. Schwingungsanalysegerät (30), das Messdaten von einem Messinstrument (20) empfängt und eine Schwingungsanalyse durchführt, wobei das Messinstrument Schwingung eines rotierenden Körpers (15) misst, der einer Messung unterzogen wird, wobei das Schwingungsanalysegerät umfasst:

   eine Einstelleinheit (202), die Informationen über den rotierenden Körper und einen Kriteriumwert zum Diagnostizieren eines Schwingungszustands des rotierenden Körpers einstellt;
   einen Analysator (206), der eine Frequenzanalyse der von dem Messinstrument empfangenen Messdaten durchführt,
   einen Prozessor (214), der, für eine vorgeschriebene Anzahl von Spitzen, die den größten Spitzenwert aufweisen, in einer absteigenden Reihenfolge in einem durch die Frequenzanalyse erhaltenen Frequenzspektrum, ein Teil auf der Grundlage der Informationen über den rotierenden Körper spezifiziert;
   eine Bestimmungseinheit (210), die, für die vorgeschriebene Anzahl von Spitzen, den Schwingungszustand auf der Grundlage des Spitzenwertes und des Kriteriumwertes bestimmt; und
   ein Display (212), das, für die vorgeschriebene Anzahl von Spitzen, den Spitzenwert, das Teil und ein Ergebnis der Bestimmung durch die Bestimmungseinheit zeigt.

2. Schwingungsanalysegerät nach Anspruch 1, wobei
   die vorgeschriebene Anzahl durch einen Benutzer, der das Schwingungsanalysegerät benutzt, eingestellt wird.

3. Schwingungsanalysegerät (30), das Messdaten von einem Messinstrument (20) empfängt und eine Schwingungsanalyse durchführt, wobei das Messinstrument Schwingung eines rotierenden Körpers (15) misst, der einer Messung unterzogen wird, wobei das Schwingungsanalysegerät umfasst:

   eine Einstelleinheit (202), die Informationen über den rotierenden Körper, mehrere Frequenzbänder, für die eine Schwingungsanalyse durchgeführt wird, und mehrere Kriteriumwerte, die jeweils in Entsprechung zu den mehreren Frequenzbändern bereitgestellt werden, einstellt;
   einen Analysator (206), der eine Frequenzanalyse der von dem Messinstrument empfangenen Messdaten durchführt,
   eine Bestimmungseinheit (210), die, in jedem Frequenzband der mehreren Frequenzbänder, einen Schwingungszustand in dem Frequenzband auf der Grundlage eines Spitzenwertes eines durch die Frequenzanalyse erhaltenen Frequenzspektrums und eines dem Frequenzband entsprechenden Kriteriumwertes bestimmt; und
   einen Prozessor (214), der die Verarbeitung der Einstellungseinheit, des Analysators und der Bestimmungseinheit steuert.

4. Schwingungsanalysegerät nach Anspruch 3, wobei
   die mehreren Frequenzbänder durch einen Benutzer, der das Schwingungsanalysegerät benutzt, eingestellt werden.

5. Schwingungsanalysegerät nach einem der Ansprüche 1 bis 4, des Weiteren umfassend eine Datenbankeinheit (208), in der ein in mehrere Konstanten unterteilter Koeffizient einer Rotationsfrequenz des rotierenden Körpers gespeichert wird, wobei der Koeffizient zum Berechnen einer Schadensfrequenz dient, die eine Frequenz von Schwingungen darstellt, die periodisch gemäß einem beschädigten Teil des rotierenden Körpers erzeugt wird, wobei in der Schwingungsanalyse der Prozessor des Weiteren die mehreren Konstanten aus der Datenbankeinheit liest, um den Koeffizienten wiederherzustellen, und berechnet die Schadensfrequenz auf der Grundlage des wiederhergestellten Koeffizienten.

6. Schwingungsanalysegerät nach Anspruch 5, wobei

   in der Datenbankeinheit verschlüsselte Daten, die aus der Verschlüsselung der mehreren Konstanten resultieren, gespeichert werden und
   der Prozessor die verschlüsselten Daten aus der Datenbankeinheit liest, um die verschlüsselten Daten zu entschlüsseln, und den Koeffizienten aus den mehreren entschlüsselten Konstanten wiederherstellt.

7. Schwingungsanalysegerät nach Anspruch 5, wobei
die mehreren Konstanten in der Datenbankeinheit in einem binären Format gespeichert werden.

8. Schwingungsanalysegerät nach einem der Ansprüche 1 bis 4, des Weiteren umfassend eine Datenbankeinheit (208), in der verschlüsselte Daten, die aus der Verschlüsselung von Spezifikationsdaten des rotierenden Körpers resultieren, gespeichert werden, wobei
der Prozessor in der Schwingungsanalyse des Weiteren die verschlüsselten Daten aus der Datenbankeinheit liest, um die verschlüsselten Daten zu entschlüsseln, und eine Schadensfrequenz, die eine Frequenz von Schwingungen darstellt, die periodisch gemäß einem beschädigten Teil des rotierenden Körpers erzeugt werden, auf der Grundlage der entschlüsselten Spezifikationsdaten berechnet.

9. Schwingungsanalysegerät nach Anspruch 8, wobei
in der Datenbankeinheit die verschlüsselten Daten, die aus der Verschlüsselung der Spezifikationsdaten resultieren, in einem binären Format gespeichert werden.

10. Schwingungsanalysegerät nach einem der Ansprüche 1 bis 9, wobei
der rotierende Körper ein Lager ist.

11. Schwingungsanalysegerät nach Anspruch 10, wobei
die Informationen über den rotierenden Körper umfassen:

eine Rotationsgeschwindigkeit oder eine Rotationsfrequenz des Lagers und
eine Spezifikation des Lagers oder einen Koeffizienten der Rotationsfrequenz, der für die Berechnung einer BPFI, einer BPFO und einer BSF des Lagers verwendet wird.

12. Schwingungsanalysegerät nach einem der Ansprüche 1 bis 11, des Weiteren umfassend eine Kommunikationseinheit (204), die drahtlos mit dem Messinstrument kommuniziert.

13. Schwingungsmesssystem, umfassend:

ein Messinstrument (20), das Schwingungen eines rotierenden Körpers (15) misst, der einer Messung unterzogen wird; und
das Schwingungsanalysegerät (30) nach einem der Ansprüche 1 bis 12, das Messdaten von dem Messinstrument empfängt und eine Schwingungsanalyse durchführt.

## Revendications

1. Appareil d'analyse de vibrations (30) qui reçoit des données de mesure à partir d'un instrument de mesure (20) et effectue une analyse des vibrations, l'instrument de mesure mesurant des vibrations d'un corps rotatif (15) soumis à une mesure, l'appareil d'analyse de vibrations comprenant :

une unité de réglage (202) qui définit des informations sur le corps rotatif et une valeur de critère pour diagnostiquer un état vibratoire du corps rotatif ;
un analyseur (206) qui effectue une analyse de fréquences des données de mesure reçues à partir de l'instrument de mesure ;
un processeur (214) qui spécifie, pour un nombre prescrit de crêtes les plus importantes en valeur de crête dans un ordre décroissant dans un spectre de fréquences obtenu par l'analyse de fréquences, une partie sur la base des informations sur le corps rotatif ;
une unité de détermination (210) qui détermine, pour le nombre prescrit de crêtes, l'état vibratoire sur la base de la valeur de crête et de la valeur de critère ; et
un écran (212) qui affiche, pour le nombre prescrit de crêtes, la valeur de crête, la partie, et un résultat de la détermination par l'unité de détermination.

2. Appareil d'analyse de vibrations selon la revendication 1, dans lequel le nombre prescrit est fixé par un utilisateur qui utilise l'appareil d'analyse de vibrations.

3. Appareil d'analyse de vibrations (30) qui reçoit des données de mesure à partir d'un instrument de mesure (20) et effectue une analyse des vibrations, l'instrument de mesure mesurant des vibrations d'un corps rotatif (15) soumis à une mesure, l'appareil d'analyse de vibrations comprenant :

une unité de réglage (202) qui définit des informations sur le corps rotatif, une pluralité de bandes de fréquences pour lesquelles l'analyse des vibrations est effectuée, et une pluralité de valeurs de critère fournies en correspondance avec la pluralité de bandes de fréquences, respectivement ;
un analyseur (206) qui effectue une analyse de fréquences des données de mesure reçues à partir de l'instrument de mesure ;
une unité de détermination (210) qui détermine, dans chaque bande de fréquences de la pluralité de bandes de fréquences, un état vibratoire dans la bande de fréquences sur la base d'une valeur de crête d'un spectre de fréquences obtenu par l'analyse de fréquences et d'une valeur de critère correspondant à la bande de fréquences ; et
un processeur (214) qui commande le traitement de l'unité de réglage, de l'analyseur et de l'unité de détermination.

4. Appareil d'analyse de vibrations selon la revendication 3, dans lequel
la pluralité de bandes de fréquences est définie par un utilisateur qui utilise l'appareil d'analyse de vibrations.

5. Appareil d'analyse de vibrations selon l'une quelconque des revendications 1 à 4, comprenant en outre une unité de base de données (208) dans laquelle un coefficient d'une fréquence de rotation du corps rotatif est stocké comme étant divisé en une pluralité de constantes, le coefficient étant destiné à calculer une fréquence d'endommagement représentant une fréquence de vibration produite périodiquement en fonction d'une partie endommagée du corps rotatif, dans lequel
dans l'analyse des vibrations, le processeur lit en outre la pluralité de constantes à partir de l'unité de base de données pour restaurer le coefficient et calcule la fréquence d'endommagement sur la base du coefficient restauré.

6. Appareil d'analyse de vibrations selon la revendication 5, dans lequel

dans l'unité de base de données, des données chiffrées résultant du chiffrement de la pluralité de constantes sont stockées, et
le processeur lit les données chiffrées à partir de l'unité de base de données pour déchiffrer les données chiffrées et restaurer le coefficient à partir de la pluralité de constantes qui ont été déchiffrées.

7. Appareil d'analyse de vibrations selon la revendication 5, dans lequel
la pluralité de constantes est stockée dans l'unité de base de données dans un format binaire.

8. Appareil d'analyse de vibrations selon l'une quelconque des revendications 1 à 4, comprenant en outre une unité de base de données (208) dans laquelle sont stockées des données chiffrées résultant du chiffrement de données de spécification du corps rotatif, dans lequel
dans l'analyse des vibrations, le processeur lit en outre les données chiffrées provenant de l'unité de base de données pour déchiffrer les données chiffrées, et calcule une fréquence d'endommagement représentant une fréquence de vibration produite périodiquement en fonction d'une partie endommagée du corps rotatif sur la base des données de spécification qui ont été déchiffrées.

9. Appareil d'analyse de vibrations selon la revendication 8, dans lequel
dans l'unité de base de données, les données chiffrées résultant du chiffrement des données de spécification dans un format binaire sont stockées.

10. Appareil d'analyse de vibrations selon l'une quelconque des revendications 1 à 9, dans lequel le corps rotatif est un palier.

11. Appareil d'analyse de vibrations selon la revendication 10, dans lequel

les informations sur le corps rotatif comportent
une vitesse de rotation ou une fréquence de rotation du palier, et
une spécification du palier ou un coefficient de la fréquence de rotation utilisé pour le calcul d'un BPFI, d'un BPFO et d'un BSF du palier.

12. Appareil d'analyse de vibrations selon l'une quelconque des revendications 1 à 11, comprenant en outre une unité de communication (204) qui communique sans fil avec l'instrument de mesure.

13. Système de mesure des vibrations comprenant :

un instrument de mesure (20) qui mesure les vibrations d'un corps rotatif (15) soumis à la mesure ; et l'appareil d'analyse de vibrations (30) selon l'une quelconque des revendications 1 à 12, qui reçoit des données de mesure à partir de l'instrument de mesure et effectue une analyse des vibrations.

FIG.1

FIG.2

<u>20</u>

MEMORY 110

COMMUNICATION MODULE 112

MICROCOMPUTER 108

A/D CONVERTER 106

ANTIALIASING FILTER 104

ACCELERATION SENSOR 102

FIG.3

30

COMMUNICATION UNIT — 204

SETTING UNIT — 202

DISPLAY — 212

CENTRAL PROCESSING UNIT — 214

ANALYZER — 206

DB UNIT — 208

DETERMINATION UNIT — 210

FIG.4

| No. | ACCELERATION | FREQUENCY | DETERMINATION | DAMAGED PORTION |
|---|---|---|---|---|
| 1 | a1 | f1 | DANGER | ROTATION FIRST-ORDER |
| 2 | a2 | f4 | DANGER | OUTER RING FIRST-ORDER |
| 3 | a3 | f5 | DANGER | – |
| 4 | a4 | f2 | CAUTION | ROTATION SECOND-ORDER |
| 5 | a5 | f3 | CAUTION | INNER RING FIRST-ORDER |
| 6 | a6 | f8 | CAUTION | OUTER RING SECOND-ORDER |
| 7 | a7 | f7 | GOOD | – |
| 8 | a8 | f6 | GOOD | ROLLING ELEMENT FIRST-ORDER |
| 9 | a9 | f9 | GOOD | – |
| 10 | a10 | f10 | GOOD | – |

PEAK VALUE LARGE

↑
↓

PEAK VALUE SMALL

FIG.5

BEARING MODEL No.      ⌐310

ROTATION SPEED(min$^{-1}$)      ⌐320

CRITERION VALUE(m/s$^2$)      ⌐330

THE NUMBER OF SHOWN
TOP PEAK VALUES      ⌐340

## FIG.6

<MEASUREMENT INSTRUMENT>

START

S10
INITIALIZATION PROCESSING

S20
RECEIVED MEASUREMENT START SIGNAL?
NO
YES

S30
READ ACCELERATION SENSOR OUTPUT

S40
STORE DATA IN MEMORY

S50
OBTAINED PRESCRIBED NUMBER OF PIECES OF DATA ?
NO
YES

S60
READ OBTAINED DATA FROM MEMORY AND TRANSMIT DATA TO PORTABLE INFORMATION TERMINAL

S70
HAS QUITTING OPERATION BEEN PERFORMED ?
NO
YES

END

# FIG.7

<PORTABLE INFORMATION TERMINAL>

START

S110
INITIALIZATION PROCESSING

S115
SET BEARING MODEL NUMBER, ROTATION SPEED, CRITERION VALUE, etc.

S120
CALCULATE FAULT FREQUENCY FOR EACH PART BASED ON SPECIFICATIONS etc. WITHIN DB UNIT CORRESPONDING TO SET BEARING MODEL NUMBER

S125
TRANSMIT MEASUREMENT START SIGNAL TO MEASUREMENT INSTRUMENT

S130
RECEIVED DATA? — NO

YES

S135
STORE DATA IN MEMORY

S140
RECEIVED PRESCRIBED NUMBER OF PIECES OF DATA ? — NO

YES

a

a

S145
READ DATA FROM MEMORY AND PERFORM FREQUENCY ANALYSIS PROCESSING

S150
SPECIFY PART AND MAKE STATE DETERMINATION BASED ON TOP TEN PEAKS IN ANALYSIS RESULT

S155
SHOW RESULT OF DETERMINATION, WAVEFORM, etc.

S160
HAS QUITTING OPERATION BEEN PERFORMED ? — NO

YES

END

FIG.8

FIG.9

BEARING MODEL No. [           ] ⌐410

ROTATION SPEED
(min⁻¹) [           ] ⌐420

FREQUENCY
BANDWIDTH [           ] ⌐430

UPPER LIMIT
FREQUENCY [           ] ⌐440

THE NUMBER OF
FREQUENCY BANDS [           ] ⌐450

＜CRITERION VALUE SETTING＞ 460

ACCELERATION

FREQUENCY

EP 4 043 856 B1

# FIG.10

<PORTABLE INFORMATION TERMINAL>

START

S210
INITIALIZATION PROCESSING

S215
SET BEARING MODEL NUMBER AND ROTATION SPEED

S220
SET CRITERION VALUE FOR EACH FREQUENCY BAND

S225
CALCULATE FAULT FREQUENCY FOR EACH PART BASED ON SPECIFICATIONS etc. WITHIN DB UNIT CORRESPONDING TO SET BEARING MODEL NUMBER

S230
TRANSMIT MEASUREMENT START SIGNAL TO MEASUREMENT INSTRUMENT

S235
RECEIVED DATA?  NO

YES

S240
STORE DATA IN MEMORY

S245
RECEIVED PRESCRIBED NUMBER OF PIECES OF DATA ?  NO

YES

a

a

S250
READ DATA FROM MEMORY AND PERFORM FREQUENCY ANALYSIS PROCESSING

S255
MAKE DETERMINATION IN ACCORDANCE WITH CRITERION VALUE FOR EACH FREQUENCY BAND

S260
SPECIFY PART CORRESPONDING TO PEAK INCLUDED IN BAND WHERE CRITERION VALUE IS EXCEEDED

S265
SHOW RESULT OF DETERMINATION, WAVEFORM, etc.

S270
NO  HAS QUITTING OPERATION BEEN PERFORMED ?

YES

END

FIG.11

BEARING MODEL No. [          ] ⌐310

ROTATION SPEED($min^{-1}$) [          ] ⌐320

CRITERION VALUE($m/s^2$) [          ] ⌐330

FIG.12

| BEARING MODEL No. | Ca | Cb | Cc | Cd |
|---|---|---|---|---|
| 6000 | a1 | b1 | c1 | d1 |
| 6001 | a2 | b2 | c2 | d2 |
| 6002 | a3 | b3 | c3 | d3 |
| 6003 | a4 | b4 | c4 | d4 |
| ⋮ | ⋮ | ⋮ | ⋮ | ⋮ |

# FIG.13

<PORTABLE INFORMATION TERMINAL>

START

S310
INITIALIZATION PROCESSING

S315
SET BEARING MODEL NUMBER, ROTATION SPEED, CRITERION VALUE, etc.

S320
READ DIVIDED CONSTANTS OF SET BEARING MODEL NUMBER FROM DB UNIT AND RESTORE COEFFICIENT OF DAMAGE FREQUENCY FOR EACH PART

S322
CALCULATE DAMAGE FREQUENCY FOR EACH PART

S325
TRANSMIT MEASUREMENT START SIGNAL TO MEASUREMENT INSTRUMENT

S330
RECEIVED DATA? — NO

YES

S335
STORE DATA IN MEMORY

S340
RECEIVED PRESCRIBED NUMBER OF PIECES OF DATA ? — NO

YES

a

a

S345
READ DATA FROM MEMORY AND PERFORM FREQUENCY ANALYSIS PROCESSING

S350
SPECIFY PART CORRESPONDING TO PEAK AND MAKE STATE DETERMINATION

S355
SHOW RESULT OF DETERMINATION, WAVEFORM, etc.

S360
HAS QUITTING OPERATION BEEN PERFORMED ? — NO

YES

END

FIG.14

30

# FIG.15

<PORTABLE INFORMATION TERMINAL>

START

INITIALIZATION PROCESSING  —S410

SET BEARING MODEL NUMBER, ROTATION SPEED, CRITERION VALUE, etc.  —S415

READ ENCRYPTED SPECIFICATION DATA OF SET BEARING MODEL NUMBER FROM DB UNIT AND DECRYPT SPECIFICATION DATA  —S420

CALCULATE DAMAGE FREQUENCY FOR EACH PART  —S422

TRANSMIT MEASUREMENT START SIGNAL TO MEASUREMENT INSTRUMENT  —S425

RECEIVED DATA?  —S430  NO

YES

STORE DATA IN MEMORY  —S435

RECEIVED PRESCRIBED NUMBER OF PIECES OF DATA ?  —S440  NO

YES

a

---

a

READ DATA FROM MEMORY AND PERFORM FREQUENCY ANALYSIS PROCESSING  —S445

SPECIFY PART CORRESPONDING TO PEAK AND MAKE STATE DETERMINATION  —S450

SHOW RESULT OF DETERMINATION, WAVEFORM, etc.  —S455

HAS QUITTING OPERATION BEEN PERFORMED ?  —S460  NO

YES

END

34

FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016024007 A
- US 7587299 B
- US 2008234964 A1
- EP 2543977 A1